# FASCICULE DE BREVET EUROPEEN

(11) **EP 2 653 284 B1**
(45) Date de publication et mention de la délivrance du brevet: **30.09.2020**
(21) Numéro de dépôt: 13163239.0
(22) Date de dépôt: 10.04.2013
(51) Int. Cl.: B29C 45/14, B29C 51/26, B29C 37/00, B29C 31/00, B29C 31/08, B29L 31/30

(54) **Procédé et système de réalisation d'un élément de garnissage comprenant une couche de revêtement préformée**
Verfahren und System zur Erstellung eines Verkleidungselements, das eine vorgeformte Verkleidungsschicht umfasst
Method and system for producing a trim element including a preformed coating layer

(30) Priorité: 16.04.2012 FR 1253485
(43) Date de publication de la demande: 23.10.2013
(73) Titulaire: Faurecia Intérieur Industrie, 92000 Nanterre (FR)
(72) Inventeur: Marchetto, Gérald, 27950 SAINT JUST (FR); Praud, Jean-Pierre, 95430 AUVERS SUR OISE (FR)
(74) Mandataire: Lavoix

(56) Documents cités:
- EP-A1- 0 802 032
- DE-A1- 10 309 811
- US-A1- 2010 038 814

## Description

La présente invention concerne un procédé de réalisation d'un élément de garnissage du type comprenant au moins une couche de revêtement et une couche de support recouverte au moins en partie par ladite couche de revêtement, le procédé comprenant les étapes suivantes :
- prévoir une couche de revêtement sensiblement plane à une station de stockage,
- mettre en forme la couche de revêtement de sorte à ce qu'elle acquière la forme tridimensionnelle de l'élément de garnissage à réaliser,
- placer la couche de revêtement formée dans un outil de réalisation comprenant une cavité de formage ayant la forme tridimensionnelle de l'élément de garnissage à réaliser,
- assembler la couche de revêtement avec la couche de support dans la cavité de formage de sorte à obtenir l'élément de garnissage.

L'invention concerne également un système de réalisation d'un élément de garnissage destiné à mettre en oeuvre un tel procédé de réalisation.

Le document US 2010/038814 A1 décrit une méthode de fabrication d'un produit comprenant un film et un corps moulé par injection. Le document EP 0 802 032 A1 décrit une méthode de fabrication d'un corps moulé par injection recouvert d'une étiquette.

Il est connu de réaliser des éléments de garnissage comprenant une couche de support, par exemple en matériau plastique, permettant de conférer la rigidité et la forme voulues à l'élément de garnissage, et une couche de revêtement permettant de conférer une esthétique particulière à l'élément de garnissage. De tels éléments de garnissage sont par exemple destinés à former des panneaux de porte ou de toiture ou à garnir la planche de bord d'un véhicule. Ces éléments sont par exemple réalisés par compression, en appliquant la couche de support contre la couche de revêtement dans un outil de réalisation du type moule de compression, de sorte à faire adhérer la couche de revêtement contre la couche de support, ou par injection, en injectant le matériau formant la couche de support contre la couche de revêtement dans un outil de réalisation du type moule d'injection, de sorte à surmouler la couche de revêtement.

Dans un tel procédé, il peut être souhaité de préformer la couche de revêtement avant de l'assembler avec la couche de support plutôt que de conférer la forme souhaitée à la couche de revêtement au cours de son assemblage avec la couche de support. En effet, un tel préformage réduit les risques de mauvais positionnement de la couche de revêtement dans l'outil de réalisation, ce qui pourrait entraîner des plis dans la couche de revêtement ou un mauvais alignement de la couche de revêtement avec la couche de support.

Cependant, un tel procédé de réalisation réduit les cadences de production de l'élément de garnissage puisque la couche de revêtement est d'abord préformée puis stockée sous sa forme tridimensionnelle puis amenée dans l'outil de réalisation. En outre, un tel procédé nécessite de stocker la couche de revêtement à l'état formé sans endommager, ni déformer la couche de revêtement avant son assemblage avec la couche de support, ce qui entraîne des difficultés et des surcoûts dans le stockage.

L'un des buts de l'invention est de pallier ces inconvénients en proposant un procédé de réalisation dans lequel la couche de revêtement est préformée avant son assemblage avec la couche de support, tout en conservant des cadences de production acceptables et sans risque d'endommager la couche de support préformée.

A cet effet, l'invention concerne un procédé selon la revendication 1.

Ainsi, la couche de revêtement est préformée lors de son transport entre la station de stockage, dans laquelle elle est stockée à l'état « bidimensionnelle », et l'outil de réalisation. Il n'est ainsi pas nécessaire de stocker la couche de revêtement préformée avant son assemblage avec la couche de support. Ainsi, les cadences de production sont comparables à celles obtenues avec un procédé dans lequel la couche de revêtement est formée au cours de son assemblage avec la couche de support. En outre, il n'y a pas de risque d'endommager la couche de revêtement à l'état formé puisque celle-ci n'est pas stockée et est déposée directement dans l'outil de réalisation après avoir été prélevée de la station de stockage.

En outre, le procédé selon l'invention peut comprendre une ou plusieurs caractéristiques des revendications 2 à 5.

L'invention concerne également un système de réalisation d'un élément de garnissage selon la revendication 6.

Le système de réalisation selon l'invention peut comprendre, en outre, les caractéristiques de la revendication 7.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'une partie du système de réalisation de l'invention montrant la station de stockage et l'outil de manipulation,
- la Fig. 2 est une représentation schématique en coupe de la partie du système de réalisation de la Fig. 1 au cours de l'étape de prélèvement de la couche de revêtement,
- la Fig. 3 est une représentation schématique en coupe d'une autre partie du système de réalisation de l'invention au cours d'une étape de mise en forme de la couche de revêtement,
- la Fig. 4 est une représentation schématique en coupe d'une autre partie du système de réalisation de l'invention au cours d'une étape de mise en forme de la couche de revêtement,
- la Fig. 5 est une représentation schématique en coupe d'une autre partie du système de réalisation de l'invention au cours d'une étape de positionnement de la couche de revêtement dans l'outil de réalisation, et
- la Fig. 6 est une représentation schématique en coupe de la partie du système de réalisation de la Fig. 5 au cours d'une étape d'assemblage de la couche de revêtement avec la couche de support.

En référence aux figures, on décrit un procédé et un système de réalisation d'un élément de garnissage 1, comprenant une couche de support 2 et au moins une couche de revêtement 4, la face externe de la couche de support 2 étant au moins en partie revêtue par la couche de revêtement 4.

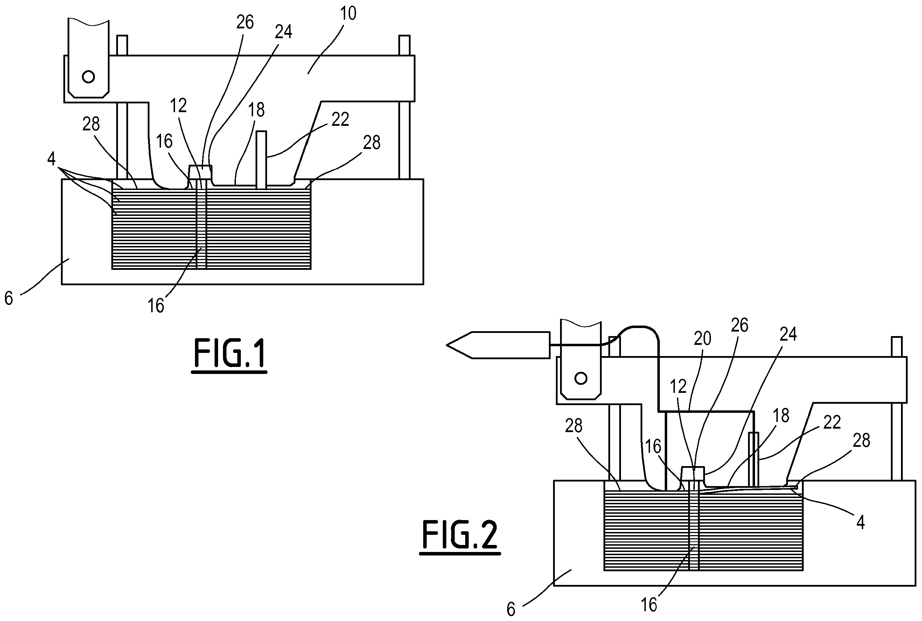

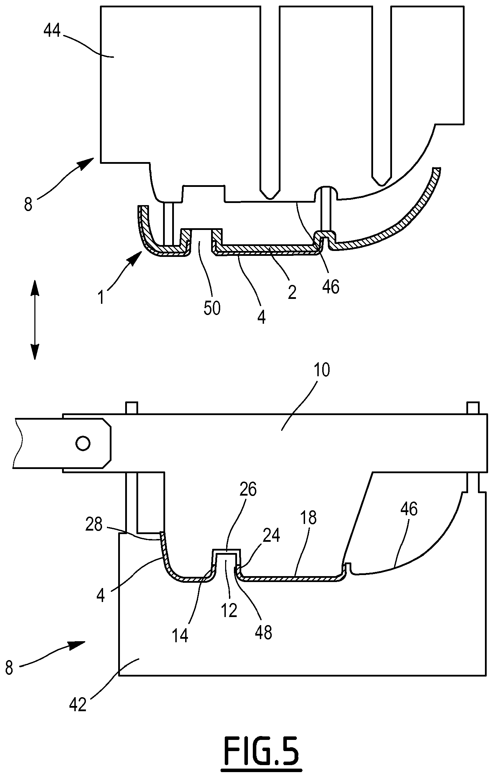

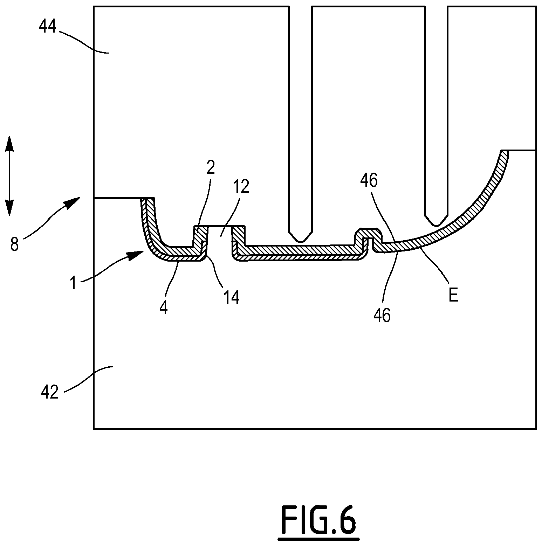

Le système de réalisation comprend essentiellement une station de stockage 6 de la couche de revêtement 4, représentée sur les Fig. 1 et 2, un outil de réalisation 8, représenté sur les Fig. 5 et 6, et un outil de manipulation 10, représenté sur les Fig. 1 à 5, agencé pour transporter la couche de revêtement 4 de la station de stockage 6 à l'outil de réalisation 8.

La couche de revêtement 4 peut être formée par tout élément apte à être mis en forme tridimensionnelle. La couche de revêtement 4 présente avant sa mise en forme une forme sensiblement plane ou bidimensionnelle, comme représentée sur les Fig. 1 et 2. Dans cet état, la couche de revêtement 4 présente une certaine souplesse permettant la déformation de la couche de revêtement 4 lors de sa mise en forme. Après sa mise en forme, la couche de revêtement présente une forme tridimensionnelle, comme représentée sur les Fig. 5 et 6. Dans cet état, la couche de revêtement 4 présente une certaine rigidité lui permettant de conserver sa forme tridimensionnelle au cours de sa manipulation ou conserve sa souplesse et est maintenue sous sa forme tridimensionnelle par l'outil de manipulation 10 ou l'outil de réalisation 8, comme cela sera décrit ultérieurement. Une telle couche de revêtement 4 est par exemple formée par un film en matériau thermoplastique, une peau en matériau textile ou naturel, comme du cuir ou autre, une feuille de bois, etc. La couche de revêtement 4 peut avoir tout aspect et tout contour souhaité. Selon le mode de réalisation représenté sur les figures, la couche de revêtement 4 comprend au moins une ouverture 12 traversant la couche de revêtement 4 et entourée par une périphérie 14 formée par le matériau de la couche de revêtement 4. Il est entendu que la couche de revêtement 4 peut présenter plusieurs ouvertures ou aucune ouverture. Il est également entendu que l'ouverture 12 peut présenter un contour quelconque, par exemple un cercle ou autre.

De préférence, les découpes prévues dans la couche de revêtement 4, par exemple pour former l'ouverture 12 ou pour définir un contour particulier, sont réalisées avant les étapes de mise en forme tridimensionnelle de la couche de revêtement. Ces découpes sont donc réalisées lorsque la couche de revêtement 4 se présente sous sa forme plane, ce qui simplifie grandement la réalisation des découpes, alors que celles-ci seraient complexes à pratiquer si la couche de revêtement 4 était dans sa forme tridimensionnelle, par exemple une fois qu'elle est assemblée avec la couche de support 2.

Comme indiqué ci-dessus, lorsqu'elle se trouve dans la station de stockage 6, la couche de revêtement 4 présente une forme plane ou bidimensionnelle et est ainsi facile à stocker, sans risque d'endommagement. La couche de revêtement 4 a déjà subi les étapes de découpe prévues, notamment la réalisation de l'ouverture 12 selon le mode de réalisation représenté sur les figures. Plusieurs couches de revêtement 4 peuvent être empilées dans la station de stockage 6, comme représenté sur les Fig. 1 et 2. Selon le mode de réalisation représenté sur les Fig. 1 et 2, la station de stockage 6 comprend un élément saillant 16 présentant une forme en coupe sensiblement complémentaire de celle de l'ouverture 12 de la couche de revêtement 4 sur lequel est emmanchée l'ouverture 12. Un tel élément saillant 16 permet de protéger la périphérie 14 de l'ouverture 12 et d'éviter tout endommagement de celle-ci lors du stockage de la couche de revêtement 4.

La couche de revêtement 4 est prélevée de la station de stockage au moyen de l'outil de manipulation 10. Cet outil 10 est mobile entre les différents postes du système de réalisation de façon connue, par exemple au moyen d'un bras robotisé, de rails ou autre. L'outil de manipulation 10 est apte à effectuer tous les mouvements nécessaires au prélèvement, au déplacement et à la mise en place de la couche de revêtement 4, par exemple en pouvant se déplacer en translation selon les trois directions d'un repère orthonormé et en pouvant se déplacer en rotation. Les moyens mis en œuvre pour déplacer l'outil de manipulation 10 sont connus et ne seront pas décrits en détail ici.

L'outil de manipulation 10 comprend une face de réception 18 de la couche de revêtement 4. Cette face de réception 18 est agencée pour recevoir l'envers de la couche de revêtement 4, c'est-à-dire la face de la couche de revêtement 4 qui sera appliquée contre la couche de support 2. A cet effet, la face de réception 18 présente sensiblement la forme tridimensionnelle que la couche de revêtement 4 devra adopter dans l'élément de garnissage 1. Plus particulièrement, la face de réception 18 présente sensiblement le même profil tridimensionnel que la partie de la couche de support 2 sur laquelle sera appliquée la couche de revêtement 4. Lors du prélèvement et du transport de la couche de revêtement 4, celle-ci est appliquée contre la face de réception 18 de l'outil de manipulation 10 et adopte sensiblement la forme de cette face 18 du fait de la souplesse de la couche de revêtement 4 ou d'un traitement particulier comme cela sera décrit ultérieurement.

L'outil de manipulation 10 est agencé pour prélever une couche de revêtement 4 de la station de stockage. L'outil de manipulation est donc amené contre ou au voisinage de la couche de revêtement 4, comme représenté sur la Fig. 1, et la couche de revêtement 4 est appliquée contre la face de réception 18. A cet effet, l'outil de manipulation 10 comprend par exemple des moyens d'aspiration débouchant sur la face de réception 18 agencés pour plaquer la couche de revêtement 4 contre la face de réception 18 et pour maintenir cette couche contre l'outil de manipulation 10 lors du déplacement de celui-ci. Les moyens d'aspirations sont par exemple formés par des conduites 20 débouchant dans la face de réception 18 et reliées à une pompe à vide de sorte à créer un vide sur la face de réception 18, ce qui entraîne l'aspiration de la couche de revêtement 4 contre la face de réception, comme représenté sur la Fig. 2. Selon le mode de réalisation représenté sur les figures, l'outil de manipulation 10 comprend en outre un élément de préhension 22 mobile en translation par rapport à la face de réception 18. Cet élément de préhension 22 est agencé pour être amené, par coulissement, contre la couche de revêtement 4 lorsque la face de réception 18 est amenée au voisinage de la couche de revêtement 4 (Fig. 1), pour aspirer la couche de revêtement 4 au moyen d'une canalisation 20 débouchant dans l'embout de l'élément de préhension et pour ramener la couche de revêtement 4 contre la face de réception 18 par coulissement de l'élément de préhension 22 vers l'intérieur de l'outil de manipulation, comme représenté sur la Fig. 2.

L'opération de prélèvement de la couche de revêtement 4 a pour effet de plaquer au moins une partie de la couche de revêtement 4 contre la face de réception 18 de l'outil de manipulation 10 et donc de faire adopter à cette partie la forme de la zone de la face de réception 18 avec laquelle elle est en contact.

Pour certains matériaux et/ou certaines formes peu complexes et/ou de petites dimensions de la couche de revêtement, cette opération suffit à plaquer l'intégralité de la couche de revêtement 4 contre la face de réception 18 et à conférer à la couche de revêtement 4 la forme tridimensionnelle voulue. Dans ce cas, l'outil de manipulation 10 peut amener directement la couche de revêtement 4 à l'outil de réalisation 8 et mettre en place celle-ci dans l'outil 8, comme cela sera décrit ultérieurement.

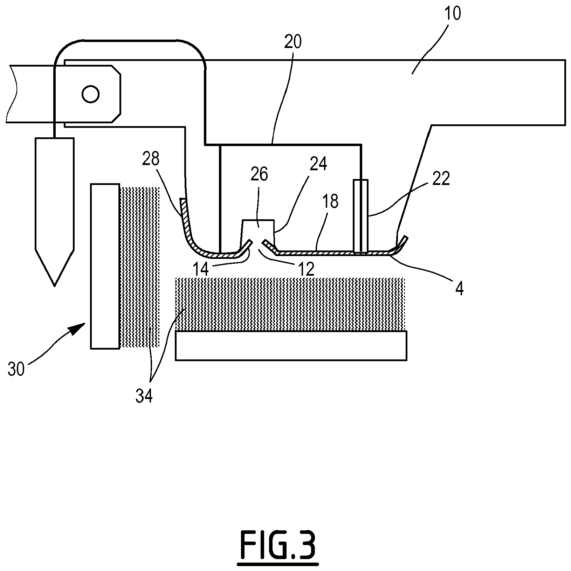

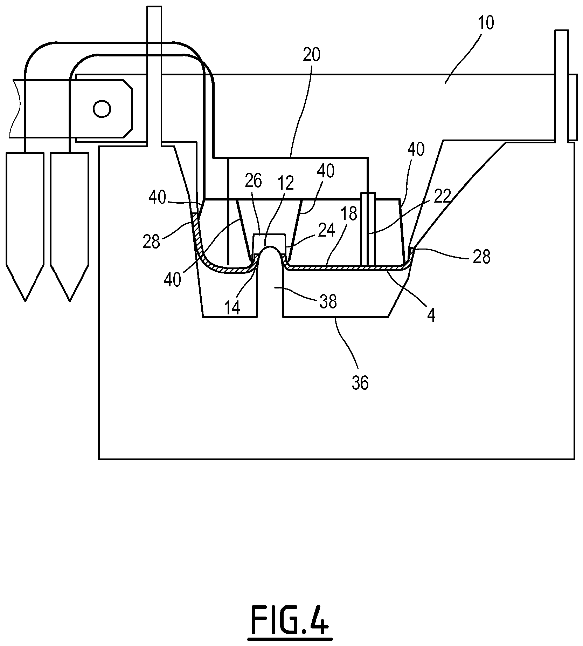

Pour d'autres matériaux et/ou pour des formes plus complexes et/ou pour des dimensions plus importantes, l'outil de manipulation 10 maintient une partie de la couche de revêtement contre la face de réception 18, mais d'autres parties de la couche de revêtement 4 doivent être plaqués contre la face de réception 18 au cours d'opérations de mise en forme supplémentaires. C'est le cas par exemple pour la périphérie 14 de l'ouverture 12, selon le mode de réalisation représenté sur les Fig. 3 et 4, qui doit être appliquée contre la paroi 24 d'une zone en creux 26 formée dans la face de réception 18, et pour les bords 28 de la couche de revêtement 4 qui doivent être appliqués contre les bords de l'outil de manipulation 10.

A cet effet, l'outil de manipulation 10 est agencé pour déplacer la couche de revêtement 4 à différentes stations de traitement, telles qu'une station de chauffage 30 (Fig. 3) et/ou un outil de mise en forme intermédiaire 32 (Fig. 4) avant d'amener la couche de revêtement dans l'outil de réalisation 8.

La station de chauffage 30 est agencée pour chauffer la couche de revêtement 4 sur l'outil de manipulation 10 afin de permettre la mise en forme ladite couche de revêtement 4, par exemple pour la rendre plus malléable et pour permettre son placage dans des zones en décrochement par aspiration contre la face de réception 18. Par exemple, la paroi 24 de la zone en creux 26 s'étend sensiblement perpendiculairement par rapport au reste de la face de réception 18. L'assouplissement de la couche de revêtement 4 par chauffage permet de faciliter la déformation de la couche 4 pour lui permettre de se plaquer contre la paroi 24 de la zone en creux 26. La station de chauffage 30 comprend par exemple une ou plusieurs sources de chaleur 34 orientées de sorte à irradier de la chaleur vers la couche de revêtement 4, et plus particulièrement vers les zones de celle-ci devant présenter un décrochement. Ces sources de chaleur 34 sont par exemple formées par des panneaux radians, des radiateurs ou des résistances chauffantes ou autres.

Pour améliorer le placage, notamment dans les zones de forme complexe, tels que des zones en décrochement, l'outil de manipulation 10 peut placer la couche de revêtement 4 dans un outil de mise en forme intermédiaire 32 présentant une forme sensiblement complémentaire de celle que doit avoir la couche de revêtement 4 dans sa forme tridimensionnelle. Ainsi, l'outil de mise en forme intermédiaire 32 comprend par exemple une paroi interne 36 dont la forme épouse au moins localement intimement celle de la face de réception 18 de l'outil de manipulation 10, par exemple dans les zones de forme complexe, de sorte que les zones de la couche de revêtement 4 s'étendant sur ces zones de forme complexe sont appliquée contre la face de réception 18 lorsque l'outil de manipulation 10 est appliqué contre la paroi interne 36 de l'outil de mise en forme intermédiaire 32, comme représenté sur la Fig. 4. Dans le mode de réalisation représenté sur les figures, les bords 28 de la couche de revêtement 4 sont par exemple repliés contre les bords de la face de réception. Selon ce mode de réalisation, l'outil de mise en forme intermédiaire 32 comprend en outre une zone en saillie 38 de forme sensiblement complémentaire à la zone en creux 26 de l'outil de manipulation 10 et dont la section présente une forme sensiblement complémentaire de celle de l'ouverture 12 de la couche de revêtement 4. La zone en saillie 38 présente en outre un diamètre supérieur à celui de l'ouverture 12. Ainsi, lorsque l'ouverture 12 est emmanchée sur la zone en saillie 38, celle-ci est agencée pour rabattre la périphérie 14 de l'ouverture 12 contre la paroi 24 de la zone en creux 26 de l'outil de manipulation 10, comme représenté sur la Fig. 4.

Lorsque la couche de revêtement 4 a subi un chauffage préalable à la station de chauffage 30, la déformation de cette couche 4 sous l'effet du contact avec la paroi interne 36 de l'outil de mise en forme intermédiaire 32 peut être facilité, en particulier lorsque la couche de revêtement 4 est formée en un matériau thermoplastique.

Afin d'améliorer le maintien de la couche de revêtement 4 contre la face de réception 18 de l'outil de manipulation, en particulier dans les zones de forme complexe, des moyens d'aspiration supplémentaires débouchant dans les zones de forme complexe sont prévus. Ainsi, des conduites 40, débouchant par exemple sur les bords de la face de réception et sur la paroi 24 de la zone en creux 26 et reliées à une pompe à vide, permettent de créer un vide sur la face de réception 18 dans ces zones afin d'assurer le maintien de la couche de revêtement 4 après qu'elle a été déformée dans ces zones, comme représenté sur la Fig. 4.

Une fois que la couche de revêtement 4 a acquis la forme tridimensionnelle qu'elle doit avoir dans l'élément de garnissage 1, l'outil de manipulation 10 la transporte jusqu'à l'outil de réalisation 8 de l'élément de garnissage 1, comme représenté sur les Fig. 5 et 6.

L'outil de réalisation 8 est classique pour ce genre d'application. L'outil de réalisation 8 comprend une première partie 42 et une deuxième partie 44, formant, selon le mode de réalisation représenté sur les Fig. 5 et 6, les parois d'une cavité d'injection d'un moule d'injection. Selon un autre mode de réalisation, les première et deuxième parties 42 et 44 forment les parties mâle et femelle d'un moule de compression. Les première et deuxième parties 42 et 44 comprennent chacune une paroi interne 46, faisant face à la paroi interne 46 de l'autre partie. Les parois internes 46 présentent des formes sensiblement complémentaires l'une de l'autre, correspondant à la forme que l'on souhaite conférer à l'élément de garnissage 1 à réaliser. Selon l'outil de réalisation 8, au moins une des parties 42 ou 44 peut comprendre des moyens de chauffage et/ou des buses d'injection d'un matériau plastique entre les parois internes 46.

Les première et deuxième parties 42 et 44 de l'outil 8 sont mobiles l'une par rapport à l'autre selon une direction de déplacement représentée par la flèche sur les figures, entre une position écartée (Fig. 5) et une position rapprochée (Fig. 6).

En position écartée, les première et deuxième parties sont suffisamment écartées l'une de l'autre pour permettre à l'outil de manipulation 10 de positionner la couche de revêtement 4 formée contre la paroi interne 46 de l'une des parties. Selon le mode réalisation représenté sur les figures, cette paroi interne 46 comprend un élément saillant 48 s'étendant vers l'autre paroi interne 46 et sur lequel la périphérie 14 de l'ouverture 12 de la couche de revêtement 4 est emmanché. L'élément saillant 14 présente donc en section une forme sensiblement complémentaire de celle de l'ouverture 12. En relâchant l'aspiration de la couche de revêtement 4 contre la face de réception 18, la couche de revêtement 4 est disposée contre tout ou partie de la paroi interne 46 et est maintenue contre celle-ci, par exemple grâce à l'emmanchement de la périphérie 14 sur l'élément saillant 48 et aux zones de la paroi interne 46 tapissées par les bords 28 de la couche de revêtement 4. La couche de revêtement 4 est ainsi positionnée dans l'outil de réalisation 8.

On notera que l'outil de réalisation 8 est agencé pour séparer un élément de garnissage fini des parois internes 46 des première et deuxième parties 42 et 44 lors du passage de l'outil de réalisation 8 en position écartée, comme représenté sur la Fig. 5. L'outil de manipulation 10 est alors agencé pour prélevé l'élément de garnissage 1 terminé lors de l'opération de positionnement de la couche de revêtement 4 dans l'outil de réalisation. Ainsi, un élément de garnissage 1 fini est retiré de l'outil de réalisation 8 lorsqu'une couche de revêtement 4 est amenée pour former un nouvel élément de garnissage par le même outil de manipulation 10.

En position rapprochée, les parois internes 46 des première et deuxième parties sont séparées par un espace E et forment une cavité de formage dont la forme correspond sensiblement à celle de l'élément de garnissage à réaliser. Lorsque les première et deuxième parties sont en position rapprochée, la couche de support 2 est assemblée avec la couche de revêtement 4 par exemple par injection d'un matériau de moulage formant la couche de support 2 dans la cavité de formage contre la couche de revêtement 4, comme représenté sur la Fig. 6, ou en disposant une couche de support 2 entre les première et deuxième parties et en l'assemblant avec la couche de revêtement 4 par compression en fermant la cavité de formage.

L'élément saillant 48 permet de former une zone en creux ou une ouverture 50 dans l'élément de garnissage 1, par exemple pour le logement d'un élément fonctionnel, tout ou partie de la paroi de cette zone en creux ou ouverture 50 étant revêtue par la périphérie 14 de l'ouverture 12 de la couche de revêtement 4. On obtient ainsi une zone en creux ou une ouverture dont l'aspect est particulièrement satisfaisant sans nécessiter d'opération de découpe ou de finition sur l'élément de garnissage et/ou la couche de revêtement alors que ceux-ci sont dans leur forme tridimensionnelle.

Lorsque la couche de revêtement 4 recouvre complètement la couche de support 2, l'aspect de l'élément de garnissage 1 est formé par celui de la couche de revêtement 4. Lorsque la couche de revêtement 4 recouvre une partie de la couche de support 2, comme représenté sur les Fig. 5 et 6, l'aspect de l'élément de garnissage 1 est formé par celui de la couche de revêtement d'une part et par celui de la couche de support 2 d'autre part. Il est entendu que plusieurs couches de revêtement peuvent être placées dans l'outil de réalisation afin d'offrir un plus grand choix dans l'aspect de l'élément de garnissage obtenu.

Le procédé et le système décrits ci-dessus permettent d'obtenir un élément de garnissage présentant un aspect particulièrement satisfaisant sans nécessiter d'opérations de finition. Les cadences de production sont satisfaisantes car le préformage de la couche de revêtement se fait lors de son transport entre la station de stockage et l'outil de réalisation. En outre, le stockage des couches de revêtement se fait alors que celles-ci sont dans une forme sensiblement plane, ce qui n'entraîne pas de difficulté de stockage ni de risque d'endommagement des couches de revêtement.

## Revendications

1. Procédé de réalisation d'un élément de garnissage (1) tridimensionnel comprenant au moins une couche de revêtement (4) et une couche de support (2) recouverte au moins en partie par ladite couche de revêtement (4), le procédé comprenant les étapes suivantes :
- prévoir une couche de revêtement (4) sensiblement plane à une station de stockage (6),
- mettre en forme la couche de revêtement (4) de sorte à ce qu'elle acquière la forme tridimensionnelle de l'élément de garnissage (1) à réaliser,
- placer la couche de revêtement (4) formée dans un outil de réalisation (8) comprenant une cavité de formage ayant la forme tridimensionnelle de l'élément de garnissage à réaliser,
- assembler la couche de revêtement (4) avec la couche de support (2) dans la cavité de formage de sorte à obtenir l'élément de garnissage (1),
**caractérisé en ce que** la couche de revêtement (4) est transportée de la station de stockage (6) à l'outil de réalisation (8) par un outil de manipulation (10) présentant la forme tridimensionnelle de la couche de revêtement (4) à former, ledit outil de manipulation (10) étant agencé pour prélever la couche de revêtement (4) de la station de stockage (6) et pour la placer dans l'outil de réalisation (8) en conférant à la couche de revêtement (4) sa forme tridimensionnelle lors du transport de la couche de revêtement (4), et
**en ce que** l'étape de mise en forme de la couche de revêtement (4) comprend le passage de l'outil de manipulation (10) à une station de chauffage (30), ladite station (30) étant agencée pour chauffer la couche de revêtement (4) sur l'outil de manipulation (10) afin de permettre la mise en forme ladite couche de revêtement (4) et une étape d'aspiration et de placage de la couche de revêtement (4) contre une face de réception (18) de l'outil de manipulation (10), ladite face de réception (18) présentant la forme tridimensionnelle de la couche de revêtement (4).

2. Procédé de réalisation selon la revendication 1, **caractérisé en ce que** l'étape de mise en forme de la couche de revêtement (4) comprend une étape de disposition de la couche de revêtement (4) portée par l'outil de manipulation (10) dans un outil de mise en forme intermédiaire (32) présentant une forme complémentaire d'au moins une partie de la forme tridimensionnelle de la couche de revêtement (4) à former.

3. Procédé de réalisation selon la revendication 1 ou 2, **caractérisé en ce que** la couche de revêtement (4) comprend au moins une ouverture (12) traversant ladite couche de revêtement (4), la périphérie (14) de ladite ouverture (12) étant destinée à couvrir les parois d'une zone en creux ou d'une ouverture (50) formée dans l'élément de garnissage (1), l'outil de manipulation (10) comprenant au moins une zone en creux (26) contre laquelle ladite périphérie (14) est appliquée lors de l'étape de mise en forme de la couche de revêtement (4).

4. Procédé de réalisation selon la revendication 3 lorsqu'elle dépend de la revendication 2, **caractérisé en ce que** l'outil de mise en forme intermédiaire (32) comprend une zone en saillie (38) de forme sensiblement complémentaire à la zone en creux (26) de l'outil de manipulation (10), l'outil de manipulation (10) enfonçant la périphérie (14) de l'ouverture (12) de la couche de revêtement (4) sur ladite zone en saillie (38) de sorte à appliquer ladite périphérie (14) contre la zone en creux (26) de l'outil de manipulation (10).

5. Procédé de réalisation selon l'une quelconque des revendications 1 à 4, **caractérisé en ce que** la couche de revêtement (4) subit au moins une étape de découpe avant l'étape de mise en forme tridimensionnelle de ladite couche de revêtement (4).

6. Système de réalisation d'un élément de garnissage (1) destiné à mettre en oeuvre le procédé de réalisation selon l'une quelconque des revendications 1 à 5, ledit système comprenant :
- une station de stockage (6) d'au moins une couche de revêtement (4) sensiblement plane,
- un outil de réalisation (8) comprenant une cavité de formage présentant la forme tridimensionnelle de l'élément de garnissage (1) à réaliser, et
- un outil de manipulation (10) adapté pour prélever une couche de revêtement (4) de la station de stockage (6) et pour la placer dans l'outil de réalisation (8),
**caractérisé en ce que** l'outil de manipulation (10) présente la forme tridimensionnelle de la couche de revêtement (4) à former et est adapté pour conférer cette forme à ladite couche de revêtement (4) lors de son transport de la station de stockage (6) à l'outil de réalisation (8),
**en ce que** le système de réalisation comprend, en outre, une station de chauffage (30) agencée pour chauffer la couche de revêtement (4) portée par l'outil de manipulation (10) lors de son transport de la station de stockage (6) à l'outil de réalisation (8) et,
**en ce que** l'outil de manipulation (10) est adapté pour aspirer et plaquer la couche de revêtement (4) contre une face de réception (18) de l'outil de manipulation (10), ladite face de réception (18) présentant la forme tridimensionnelle de la couche de revêtement (4).

7. Système de réalisation selon la revendication 6, **caractérisé en ce qu'**il comprend en outre un outil de mise en forme intermédiaire (32) présentant une forme complémentaire d'au moins une partie de la forme tridimensionnelle de la couche de revêtement (4) à former, l'outil de manipulation (10) étant agencé pour transporter la couche de revêtement (4) de la station de stockage (6) à l'outil de mise en forme intermédiaire (32) et de l'outil de mise en forme intermédiaire (32) à l'outil de réalisation (8).

## Patentansprüche

1. Verfahren zur Herstellung eines dreidimensionalen Verkleidungselementes (1), das mindestens eine Deckschicht (4) und eine Trägerschicht (2), die mindestens teilweise von der Deckschicht (4) bedeckt ist, umfasst, wobei das Verfahren die folgenden Schritte umfasst:
- Vorsehen einer im wesentlichen planen Deckschicht (4) einer Bevorratungsstation (6),
- in Form Bringen der Deckschicht (4) derart, dass sie die dreidimensionale Form des herzustellenden Verkleidungselementes (1) annimmt,
- Einlegen der geformten Deckschicht (4) in ein Herstellungswerkzeug (8), das einen Formenhohlraum in der dreidimensionalen Form des herzustellenden Verkleidungselemente umfasst,
- Zusammensetzen der Deckschicht (4) mit der Trägerschicht (2) in dem Formenhohlraum, um das Verkleidungselement (1) zu erhalten,
**dadurch gekennzeichnet, dass** die Deckschicht (4) von der Bevorratungsstation (6) zu dem Herstellungswerkzeug (8) von einem Handhabungswerkzeug (10), das die dreidimensionale Form der zu formenden Deckschicht (4) aufweist, transportiert wird, wobei das Handhabungswerkzeug (10) ausgebildet ist, die Deckschicht (4) der Bevorratungsstation (6) zu entnehmen und sie in dem Herstellungswerkzeug (8) anzuordnen, wobei der Deckschicht (4) ihre dreidimensionale Form bei dem Transport der Deckschicht (4) mitgeteilt wird, und
dass der Schritt des in Form Bringens der Deckschicht (4) den Übergang des Handhabungswerkzeuges (10) zu einer Heizstation (30), wobei die genannte Station (30) ausgebildet ist, die Deckschicht (4) auf dem Handhabungswerkzeug (10) aufzuheizen, um das in Form Bringen der Deckschicht (4) zuzulassen, und einen Schritt des Ansaugens und Anordnens der Deckschicht (4) gegen eine Aufnahmefläche (18) des Handhabungswerkzeugs (10) umfasst, wobei die Aufnahmefläche (18) die dreidimensionale Form der Deckschicht (4) aufweist.

2. Herstellungsverfahren nach Anspruch 1, **dadurch gekennzeichnet, dass** der Schritt des in Form Bringens der Deckschicht (4) einen Schritt des Anordnens der von dem Handhabungswerkzeug (10) getragenen Deckschicht (4) in ein Zwischenformwerkzeug (32) umfasst, das eine komplementäre Form von mindestens einem Teil der dreidimensionalen Form der zu formenden Deckschicht (4) aufweist.

3. Herstellungsverfahren nach Anspruch 1 oder 2, **dadurch gekennzeichnet, dass** die Deckschicht (4) mindestens eine die Deckschicht (4) durchgreifende Öffnung (12) aufweist, wobei der Umfang (14) der Öffnung (12) vorgesehen ist, die Wände einer vertieften Zone oder einer Öffnung (50), die in dem Verkleidungselement (1) gebildet ist, zu bedecken, wobei das Handhabungswerkzeug (10) mindestens eine vertiefte Zone (26) umfasst, gegen die der Umfang (14) bei dem Schritt des in Form Bringens der Deckschicht (4) angelegt wird.

4. Herstellungsverfahren nach Anspruch 3, wenn er vom Anspruch 2 abhängt, **dadurch gekennzeichnet, dass** das Zwischenformwerkzeug (32) eine vorspringende Zone (38) in im Wesentlichen komplementärer Form zu der vertieften Zone (26) des Handhabungswerkzeugs (10) umfasst, wobei das Handhabungswerkzeug (10) den Umfang (14) der Öffnung (12) der Deckschicht (4) auf die vorspringende Zone (38) schiebt, um den Umfang (14) gegen die vertiefte Zone (26) des Handhabungswerkzeugs (10) zu drücken.

5. Herstellungsverfahren nach einem beliebigen der Ansprüche 1 bis 4, **dadurch gekennzeichnet, dass** die Deckschicht (4) mindestens einen Schritt des Schneidens vor dem Schritt des dreidimensionalen in Form Bringens der Deckschicht (4) erfährt.

6. System zur Herstellung eines Verkleidungselementes (1), das vorgesehen ist, das Herstellungsverfahren nach einem beliebigen der Ansprüche 1 bis 5 umzusetzen, wobei das System umfasst:
- eine Bevorratungsstation (6) für mindestens eine im Wesentlichen plane Deckschicht (4),
- ein Herstellungswerkzeug (8), das einen die dreidimensionale Form des herzustellenden Verkleidungselemente (1) aufweisenden Formenhohlraum umfasst und
- ein Handhabungswerkzeug (10), das ausgebildet ist, eine Deckschicht (4) von der Bevorratungsstation (6) zu entnehmen und sie in dem Herstellungswerkzeug (8) zu platzieren,
- **dadurch gekennzeichnet, dass** das Handhabungswerkzeug (10) die dreidimensionale Form der zu formenden Deckschicht (4) aufweist und angepasst ist, diese Form der Deckschicht (4) bei ihrem Transport von der Bevorratungsstation (6) zu dem Herstellungswerkzeug (8) mitzuteilen,
dass das Herstellungssystem außerdem eine Heizstation (30) umfasst, die ausgebildet ist, die von dem Handhabungswerkzeug (10) getragene Deckschicht (4) bei ihrem Transport von der Bevorratungsstation (6) zu dem Herstellungswerkzeug (8) aufzuheizen, und
dass das Handhabungswerkzeug (10) angepasst ist, die Deckschicht (4) gegen eine Aufnahmefläche (18) des Handhabungswerkzeuges(10) an zu saugen und anzulegen, wobei die Aufnahmefläche (18) die dreidimensionale Form der Deckschicht (4) aufweist.

7. Herstellungssystem nach Anspruch 6, **dadurch gekennzeichnet, dass** es außerdem ein Zwischenformwerkzeug (32) umfasst, dass eine komplementäre Form von mindestens einem Teil der dreidimensionalen Form der zu formenden Deckschicht (4) aufweist, wobei das Handhabungswerkzeug (10) ausgebildet ist, die Deckschicht (4) von der Bevorratungsstation (6) zu dem Zwischenformwerkzeug (32) und von dem Zwischenformwerkzeug (32) zu dem Herstellungswerkzeug (8) zu transportieren.

## Claims

1. Method for producing a three-dimensional trim element (1) comprising at least one cover layer (4) and a support layer (2) which is covered at least in part by said cover layer (4), the method comprising the following steps:
- providing a substantially planar cover layer (4) to a storage station (6),
- shaping the cover layer (4) such that it acquires the three-dimensional shape of the trim element (1) to be produced,
- placing the shaped cover layer (4) in a production tool (8) comprising a shaping cavity which has the three-dimensional shape of the trim element to be produced,
- assembling the cover layer (4) with the support layer (2) in the shaping cavity so as to obtain the trim element (1),
**characterised in that** the cover layer (4) is transported from the storage station (6) to the production tool (8) by a handling tool (10) which has the three-dimensional shape of the cover layer (4) to be shaped, said handling tool (10) being arranged to remove the cover layer (4) from the storage station (6) and to place it in the production tool (8) while conferring on the cover layer (4) its three-dimensional shape while the cover layer (4) is being transported, and
**in that** the step of shaping the cover layer (4) comprises passing the handling tool (10) to a heating station (30), said station (30) being arranged to heat the cover layer (4) on the handling tool (10) so as to allow said cover layer (4) to be shaped, and a step of suctioning and plating the cover layer (4) to a receiving face (18) of the handling tool (10), said receiving face (18) having the three-dimensional shape of the cover layer (4).

2. Production method according to claim 1, **characterised in that** the step of shaping the cover layer (4) comprises a step of arranging the cover layer (4) carried by the handling tool (10) in an intermediate shaping tool (32) which has a complementary shape to at least a portion of the three-dimensional shape of the cover layer (4) to be shaped.

3. Production method according to claim 1 or 2, **characterised in that** the cover layer (4) comprises at least one opening (12) passing through said cover layer (4), the periphery (14) of said opening (12) being intended to cover the walls of a hollow zone or of an opening (50) formed in the trim element (1), the handling tool (10) comprising at least one hollow zone (26) against which said periphery (14) is applied during the step of shaping the cover layer (4).

4. Production method according to claim 3 when it is dependent on claim 2, **characterised in that** the intermediate shaping tool (32) comprises a projecting zone (38) having a substantially complementary shape to the hollow zone (26) of the handling tool (10), the handling tool (10) pushing in the periphery (14) of the opening (12) of the cover layer (4) on said projecting zone (38) so as to apply said periphery (14) against the hollow zone (26) of the handling tool (10).

5. Production method according to any one of claims 1 to 4, **characterised in that** the cover layer (4) undergoes at least one cutting step before the step of three-dimensional shaping of said cover layer (4).

6. System for producing a trim element (1), for carrying out the production method according to any one of claims 1 to 5, said system comprising:
- a storage station (6) for at least one substantially planar cover layer (4),
- a production tool (8) comprising a shaping cavity having the three-dimensional shape of the trim element (1) to be produced, and
- a handling tool (10) which is adapted to remove a cover layer (4) from the storage station (6) and to place it in the production tool (8),
**characterised in that** the handling tool (10) has the three-dimensional shape of the cover layer (4) to be shaped and is adapted to confer that shape on said cover layer (4) while it is being transported from the storage station (6) to the production tool (8),
**in that** the production system further comprises a heating station (30) which is arranged to heat the cover layer (4) carried by the handling tool (10) while it is being transported from the storage station (6) to the production tool (8), and
**in that** the handling tool (10) is adapted to suction and plate the cover layer (4) to a receiving face (18) of the handling tool (10), said receiving face (18) having the three-dimensional shape of the cover layer (4).

7. Production system according to claim 6, **characterised in that** it further comprises an intermediate shaping tool (32) which has a complementary shape to at least a portion of the three-dimensional shape of the cover layer (4) to be shaped, the handling tool (10) being arranged to transport the cover layer (4) from the storage station (6) to the intermediate shaping tool (32) and from the intermediate shaping tool (32) to the production tool (8).
